# EUROPEAN PATENT APPLICATION

(11) **EP 4 184 403 A1**
(43) Date of publication of application: **24.05.2023**
(21) Application number: 21889480.6
(22) Date of filing: 01.11.2021
(51) Int. Cl.: G06Q 10/10, G06Q 20/40, G06Q 20/32, H04L 9/08

(54) **ELECTRONIC DEVICE FOR GENERATING TRANSACTION INCLUDING INTERNAL DATA, AND OPERATING METHOD THEREOF**

(30) Priority: 04.11.2020 KR 20200146210
(71) Applicant: Samsung Electronics Co., Ltd., Suwon-si, Gyeonggi-do 16677 (KR)
(72) Inventor: LEE, Youna, Suwon-si, Gyeonggi-do 16677 (KR); JE, Seongmin, Suwon-si, Gyeonggi-do 16677 (KR); PARK, Sungjin, Suwon-si, Gyeonggi-do 16677 (KR); AN, Doyeong, Suwon-si, Gyeonggi-do 16677 (KR); JANG, Yongseok, Suwon-si, Gyeonggi-do 16677 (KR)
(74) Representative: HGF
(86) International application number: PCT/KR2021/015559
(87) International publication number: WO 2022/098015

(57) **Abstract**

A portable electronic device and a method thereof are disclosed. The portable electronic device includes a communication circuit, a processor, and a memory configured to store instructions. The instructions, when executed by the processor, causes the portable electronic device to execute a first smart contract, to obtain at least a portion of data stored in the memory, by executing the first smart contract, to create a transaction including the at least portion of data, to sign the created transaction based on a private key of a user of the portable electronic device, and to send the signed transaction to at least one node of a decentralization network through the communication circuit.

## Description

### [Technical Field]

The disclosure relates generally to an electronic device for generating a transaction including internal data and an operating method thereof.

### [Background Art]

Blockchain technology allows for the decentralization of data and information by allowing multiple nodes to share a ledger and recording blocks, which are created through computation processes of the nodes based on various consensus mechanisms, on a ledger.

Because the ledger is updated based on various consensus mechanisms and the ledger is shared by a plurality of nodes, data that is written once to the ledger cannot be tempered or revised.

Also, because a plurality of nodes keep (or store) the ledger, all transactions that are recorded on the ledger are available to everyone.

### [Disclosure]

### [Technical Problem]

Blockchain technology is capable of guaranteeing integrity of a transaction recorded on the ledger but does not guarantee the authenticity of data included in the transaction. Accordingly, a technique capable of guaranteeing the authenticity of data included in a transaction is required.

In addition, a mobile terminal is frequently used for the production, consumption, and/or distribution of data. Blockchain technology and/or a platform to be applied to the mobile terminal should consider characteristics of data that is produced, consumed, and/or distributed in the mobile terminal. In addition, blockchain technology and/or the platform to be applied to the mobile terminal should provide developers with a convenient means to develop programs and allow an administrator to reduce costs for platform management.

### [Technical Solution]

According to an embodiment of the disclosure, an electronic device and an operating method thereof may include data of the electronic device, which is obtained from a transaction, when the transaction is created, in the transaction.

According to an aspect of the disclosure, a portable electronic device includes a communication circuit, a processor that is electrically connected with the communication circuit, and a memory that is electrically connected with the processor and stores instructions. The instructions, when executed by the processor, cause the portable electronic device to execute a first smart contract, to obtain at least a portion of data stored in the memory, by executing the first smart contract, to create a transaction including the at least portion of data, to sign the created transaction based on a private key of a user of the portable electronic device, and to send the signed transaction to at least one node of a decentralization network through the communication circuit.

According to an aspect of the disclosure, an operating method of a portable electronic device includes executing a first smart contract, obtaining at least a portion of data stored in a memory, by executing the first smart contract, creating a transaction including the at least portion of data, signing the created transaction based on a private key of a user of the portable electronic device, and sending the signed transaction to at least one node of a decentralization network through a communication circuit of the portable electronic device.

### [Advantageous Effects]

According to an embodiment of the disclosure, an electronic device and an operating method thereof may include data of the electronic device, which is obtained when a transaction is created, in the transaction.

### [Description of Drawings]

The above and other aspects, features, and advantages of certain embodiments of the present disclosure will be more apparent from the following description taken in conjunction with the accompanying drawings, in which:
FIG. 1 illustrates an electronic device in a network environment, according to an embodiment;
FIG. 2 illustrates an electronic device and a decentralization network, according to an embodiment;
FIG. 3 illustrates a program of an electronic device, according to an embodiment;
FIG. 4 illustrates a program service module of an electronic device, according to an embodiment;
FIG. 5 illustrates a database management module and a program core module of an electronic device, according to an embodiment;
FIG. 6 is a flowchart illustrating an operation of an electronic device, according to an embodiment;
FIG. 7 illustrates a user interface of an electronic device, according to an embodiment;
FIG. 8 is a flowchart illustrating an operation in which an electronic device loads a code of a smart contract, according to an embodiment;
FIG. 9 is a flowchart illustrating a detailed operation in which an electronic device loads a code of a smart contract, according to an embodiment;
FIG. 10 is a flowchart illustrating an operation in which an electronic device executes a smart contract, according to an embodiment;
FIG. 11 is a flowchart illustrating a detailed operation in which an electronic device executes a smart contract, according to an embodiment; and
FIG. 12 illustrates a user interface of an electronic device, according to an embodiment.

### [Mode for Invention]

Various embodiments of the disclosure are described with reference to the accompanying drawings. However, various embodiments of the disclosure are not limited to particular embodiments, and it should be understood that modifications, equivalents, and/or alternatives of the embodiments described herein can be variously made. With regard to description of drawings, similar components may be marked by similar reference numerals.

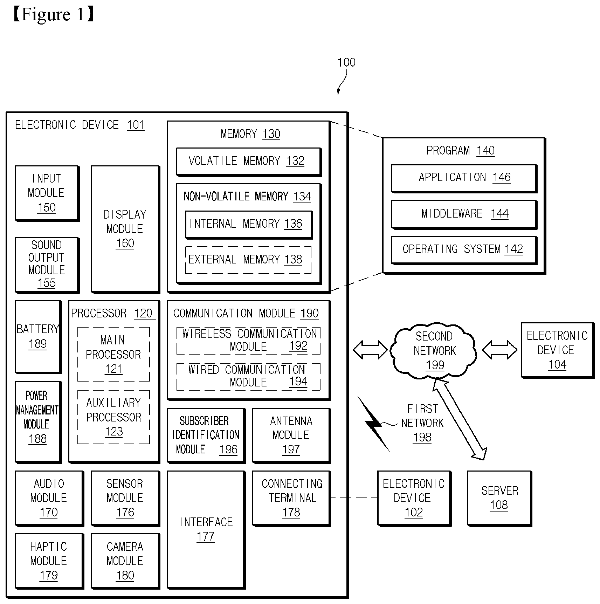

FIG. 1 illustrates an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or IR data association (IrDA)) or the second network 199 (e.g., a long-range communication network, such as a legacy cellular network, a 5^{th} generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

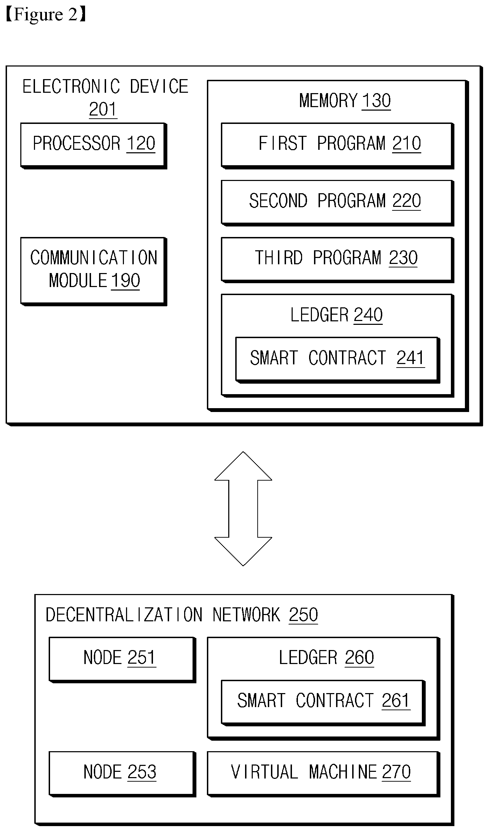

FIG. 2 illustrates an electronic device 201 and a decentralization network 250, according to an embodiment.

Referring to FIG. 2, the decentralization network 250 (e.g., an Ethereum network) may include a plurality of nodes 251 and 253, a ledger 260, and a virtual machine 270. The decentralization network 250 may be a peer-to-peer (P2P) network connected by the plurality of nodes 251 and 253.

The plurality of nodes 251 and 253 may be electronic devices that may perform computation (e.g., a proof of stake (PoS) and a proof of work (PoW) computation) for a consensus mechanism used on the decentralization network 250. Some of the nodes 251 and 253 participating in the decentralization network 250 may not participate in the consensus mechanism.

The plurality of nodes 251 and 253 may be electronic devices that are capable of being carried by the user. The plurality of nodes 251 and 253 may include a portable communication device (e.g., a smartphone), a computer device, a notebook, a netbook, a laptop, a tablet personal computer (PC), a portable multimedia device, a portable medical device, or a wearable device. The ledger 260 may have a data structure in which a plurality of blocks are linked together. Each of the plurality of blocks may include information (e.g., a hash value) of a previous block, and thus, each of the plurality of blocks may have a data structure in which the plurality of blocks are linked together. Each of the plurality of blocks may include a plurality of transactions.

A transaction may refer to a message that is signed by an account of a specified kind (e.g., an externally owned account (EOA)). A transaction may include an attribute value (e.g., a nonce value), a processing cost (e.g., gasPrice and gasLimit value), a destination account, a remittance amount, a payload (or data), a signature (e.g., a signature according to an elliptic curve digital signature algorithm (ECDSA)), or a combination thereof.

The ledger 260 may be shared by the nodes 251 and 253. Some of the nodes 251 and 253 may store a portion of ledger 260 only.

A smart contract 261 may include a program code executable through the virtual machine 270. The smart contract 261 may be a kind of a transaction.

The virtual machine 270 (e.g., an Ethereum virtual machine (EVM)) may be a virtual machine that performs a state change (e.g., an update of the ledger 260) on the decentralization network 250 and computation for the execution of the smart contract 261. The virtual machine 270 may be a virtual machine that is based on computation performed by the plurality of nodes 251 and 253. The latest state of the virtual machine 270 may be shared by the plurality of nodes 25 1 and 253.

The electronic device 201 may correspond to the electronic device 101 of FIG. 1. The electronic device 201 may operate as a node of the decentralization network 250 and/or a participant (e.g., on an externally owned account) of the decentralization network 250.

The electronic device 201 may include the processor 120, the memory 130, and the communication module 190.

The memory 130 may store the first program 210, the second program 220, and the third program 230. The memory 130 may store a ledger 240. The ledger 240 may include a smart contract 241. The ledger 240 may be a duplicate of the ledger 260. The ledger 240 may include information about at least some blocks of the plurality of blocks in the ledger 260. The smart contract 241 may be identical to the smart contract 261. The smart contract 241 may correspond to one smart contract of a plurality of smart contracts 261.

The first program 210 may correspond to the application 146 of FIG. 1. The first program 210 may be a program executable in an execution environment that the OS 142 of FIG. 1 provides.

The first program 210 may interact with the user through a user interface. The first program 210 may process a command, which is based on a user input identified through the user interface, through another program (e.g., the second program 220 or the third program 230). The first program 210 may provide a processing result of another program to the user through the user interface.

The first program 210 may provide a function for setting an access authority that allows the third program 230 to access the memory 130. The first program 210 may provide a user interface for setting an authority to access the memory 130 to the third program 230.

In response to the user input provided through the user interface, the first program 210 may provide the third program 230 with information for setting the access authority. The user input may be a touch input that is made on the user interface to select one of a plurality of access authorities of the third program 230.

The third program 230 may set an authority to access a memory region of the memory 130 that the OS 142 manages. Based on information of the first program 210, the third program 230 may set the authority to access the memory region of the memory 130 that the OS 142 manages. The third program 230 may set an access to data stored in the memory 130 such that only access to data corresponding to a specified condition is permitted from among the data stored in the memory 130. The third program 230 may not permit access to the data stored in the memory 130. Data for which access authority is set to the third program 230 may be data stored in a memory region managed in an execution environment of the first program 210, from among the data of the memory 130. The data in which the access authority is set to the third program 230, may include an identifier (e.g., a mobile station international subscriber directory number (MSISDN)) of a terminal, an IMSI, an international mobile station equipment identity (IMEI), an integrated circuit card identifier (ICCID), information generated by the terminal (e.g., a current location and a current time), information about access to data in the memory 130 (e.g., reading, writing, modifying, or erasing information), security information (e.g., biometric information), personal information (i.e., a user identity (ID)), data generated in the terminal, data stored in the terminal, or a combination thereof. The data generated in the terminal may include an image (e.g., an image obtained through the camera module 180), a video (e.g., a video obtained through the camera module 180), a text (e.g., a text obtained through the input module 150), or a combination thereof. The data stored in the terminal may include data (e.g., personal health record (PHR) data or data including biometric information measured) obtained through an external electronic device.

When there is a need to execute a smart contract for creating a transaction requiring relatively high security (e.g., a cryptocurrency transaction, verification of security information, or a use of an electronic key of a vehicle), an access authority of the third program 230 may be set to be relatively high such that the third program 230 accesses all the data stored in the memory 130.

When there is a need to execute a smart contract for creating a transaction requiring relatively low security (e.g., a cryptocurrency transaction history, a usage history of security information, use contents of an electronic key of a vehicle), an access authority of the third program 230 may be set to be relatively low such that the third program 230 accesses only specified data of the data stored in the memory 130 (e.g., information generated in a terminal).

When there is a need to execute a smart contract for creating a transaction not associated with security, the access authority of the third program 230 may be set such that an access of the third program 230 to the memory 130 is not permitted.

The second program 220 may provide an interface (or communication) between the first program 210 and the third program 230. The second program 220 may convert data of the first program 210 into data capable of being processed by the third program 230 or may convert data of the third program 230 into data capable of being processed by the first program 210.

The second program 220 may create an instance of the third program 230 based on a request of the first program 210. As the second program 220 creates the instance of the third program 230, the third program 230 may be loaded onto the memory 130.

The third program 230 may be a program executable in an execution environment distinguished from the execution environment that the OS 142 provides (e.g., an emulator). The third program 230 may provide an execution environment of a code of a smart contract.

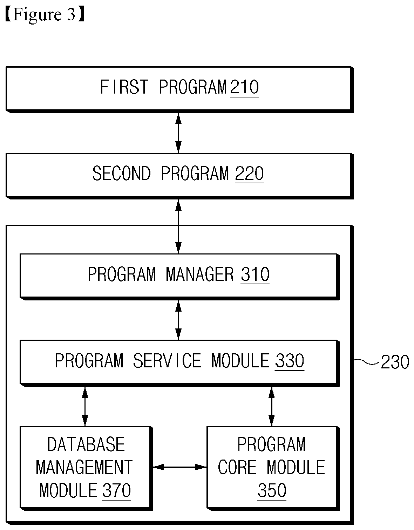

FIG. 3 illustrates programs 210, 220, and 230 of the electronic device 201, according to an embodiment.

Referring to FIG. 3, the third program 230 includes a program manager 310, the program service module 330, the program core module 350, and the database management module 370.

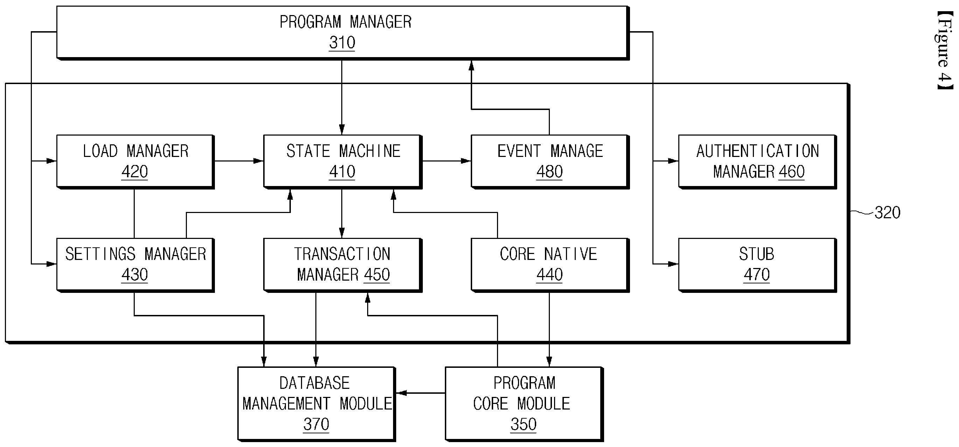

FIG. 4 illustrates a program service module 330 of the electronic device 201, according to an embodiment.

Referring to FIG. 4, the program service module 330 includes a state machine 410, a load manager 420, a settings manager 430, a core native 440, a transaction manager 450, an authentication manager 460, a stub 470, an event manager 480, or a combination thereof. The state machine 410 may perform setting an access authority of the third program 230 based on setting information obtained through the settings manager 430. The stub 470 may provide result values of some functions of any other applications.

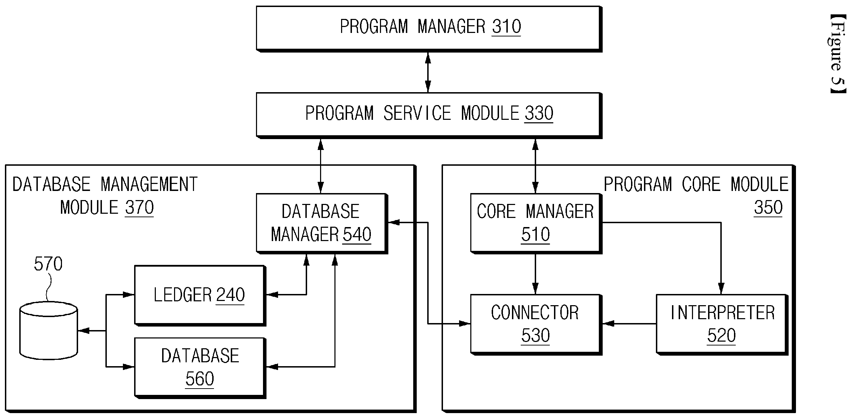

FIG. 5 illustrates a database management module 370 and a program core module 350 of the electronic device 201, according to an embodiment.

Referring to FIG. 5, the program core module 350 includes a core manager 510, an interpreter 520, a connector 530, or a combination thereof.

The program manager 310 of the third program 230 may communicate with the first program 210 through the second program 220.

The program manager 310 may receive a confirm request for a code of a smart contract. The confirm request may include an identifier for the code of the smart contract and a version for the code of the smart contract.

The program manager 310 may search the memory 130 for a smart contract corresponding to the confirm request, and search map data for the identifier of the requested code.

The program manager 310 may return a found result to the first program 210. The found result may include information about whether a smart contract exists or information about a version of a found smart contract.

The program manager 310 may receive a load request for loading a code of a smart contract from the first program 210. The load request may include an identifier for the code of the smart contract or version information of the smart contract.

The program manager 310 may search the map data for the identifier of the requested code and/or the version information. In addition, the program manager 310 may send the load request for the code of the smart contract to the program service module 330 without searching the map data for the identifier associated with the requested code.

When the identifier and/or the version information is found, the program manager 310 may provide a return value (e.g., a load success) to the first program 210 through the second program 220.

When the identifier is not found, the program manager 310 may send the load request for the code of the smart contract to the program service module 330.

The state machine 410 of the program service module 330 may request the load manager 420 to load the code in response to the load request of the program manager 310.

The load manager 420 may load the code of the smart contract from the memory 130 based on the identifier associated with the code. The load manager 420 may download the code of the smart contract based on the identifier associated with the code, and download the code of the smart contract over a network.

The load manager 420 may map information about a store path and the identifier of the code of the smart contract thus loaded (or downloaded), so as to be stored in the memory 130. Before storing the map data between the information and the identifier of the code of the smart contract, the load manager 420 may verify the integrity of the smart contract and may obtain a path of the loaded (or downloaded) smart contract.

The load manager 420 may return a load success to the state machine 410.

The state machine 410 may return the load success to the program manager 310 through the event manager 480.

The program manager 310 may receive a code execution request of the first program 210. The code execution request may include an identifier of a code of a smart contract, version information, information about an execution function, a parameter associated with the execution function, or a combination thereof.

The program manager 310 may send the code execution request of the first program 210 to the program service module 330.

The state machine 410 may request the load manager 420 for code information. The request for the code information may include an identifier for a code of a smart contract.

The load manager 420 may return the code information to the state machine 410 in response to the request for the code information.

The state machine 410 may request the program core module 350 to execute the code of the smart contract through the core native 440. The core native 440 may be referred to as a "library".

The core manager 510 of the program core module 350 may load (or fetch) a code of a smart contract. The core manager 510 may load the code of the smart contract based on a store path of the smart contract.

The interpreter 520 of the program core module 350 may execute the code.

The interpreter 520 may access data of the memory 130 by executing the code of the smart contract. As the code of the smart contract is executed, the interpreter 520 may access data targeted for access (or access-requested data).

When the authority to access the data targeted for access exists, the interpreter 520 may obtain the data targeted for access. When the authority to access the data targeted for access does not exist, the interpreter 520 may fail to access the data targeted for access.

The interpreter 520 may provide the core manager 510 with a result of executing the code of the smart contract. The interpreter 520 may provide the obtained data to the core manager 510. In the case of failing to access the data targeted for access, the interpreter 520 may notify the core manager 510 that there is no data access authority.

The core manager 510 may send an execution result to the transaction manager 450 through the program service module 330. The core manager 510 may send the obtained data to the transaction manager 450 and encrypt the obtained data and may send the encrypted data to the transaction manager 450. When the obtained data requires relatively high security, the core manager 510 may encrypt the obtained data and may send the encrypted data to the transaction manager 450. The core manager 510 may notify the transaction manager 450 that there is no data access authority.

The transaction manager 450 may process the execution result from the program core module 350. When the program core module 350 obtains data, the transaction manager 450 may create a transaction based on the data from the program core module 350. When the program core module 350 provides notification that there is no data access authority, the transaction manager 450 may provide the execution result from the program core module 350 to the state machine 410.

The transaction manager 450 may create a transaction based on the execution result from the program core module 350 and/or the data obtained by the program core module 350. The transaction manager 450 may create the transaction to include the data obtained by the program core module 350 as a payload.

The transaction manager 450 may sign the created transaction through authentication manager 460. When authentication (e.g., biometric authentication, authentication via a personal identification number (PIN) input, or authentication via a pattern input) from the user is completed, the authentication manager 460 may sign the transaction based on a private key of the user.

The transaction manager 450 may verify the signed transaction by comparing a value of hashing the transaction and a value of decrypting the signature of the transaction by using a public key.

After verifying the signed transaction, the transaction manager 450 may send the signed transaction to at least one node (e.g., the node 251 or the node 253) of the decentralization network 250. The transaction manager 450 may send the signed transaction to the at least one node through a cellular network (e.g., the second network 199 (e.g., a 4G network or a 5G network)) by using the communication module 190.

The transaction manager 450 may return the identifier (e.g., a transaction hash value) of the signed transaction to the state machine 410. The transaction manager 450 may return contents (e.g., an executed operation, a user identifier, an execution time, or a combination thereof) of the transaction to the state machine 410.

The state machine 410 may return the execution result to the program manager 310 through the event manager 480. When a transaction is created, the execution result may include an identifier of the transaction, an executed operation, a user identifier, an execution time, or a combination thereof. When there is no access authority associated with the data targeted for access, the execution result may provide notification that there is no access authority.

The program manager 310 may return the execution result to the first program 210 through the second program 220.

The first program 210 may provide the execution result to the user through the user interface.

The database management module 370 may include a database manager 540, the ledger 240, a database 560, a relational database 570, or a combination thereof.

The database manager 540 may maintain the ledger 240 in the latest state and manage the database 560.

In response to a request of the program core module 350, the database manager 540 may provide the core manager 510 with data managed in the database 560. When the third program 230 has an access authority associated with the database manager 540, the database manager 540 may provide the program core module 350 with data managed in the database 560.

The ledger 240 may be identical to the ledger 260. The ledger 240 may include only a portion of the ledger 260.

The database 560 may be a set of data stored in the memory 130.

The relational database 570 may be a database (e.g., SQLite) that stores and provides access to correlated data points.

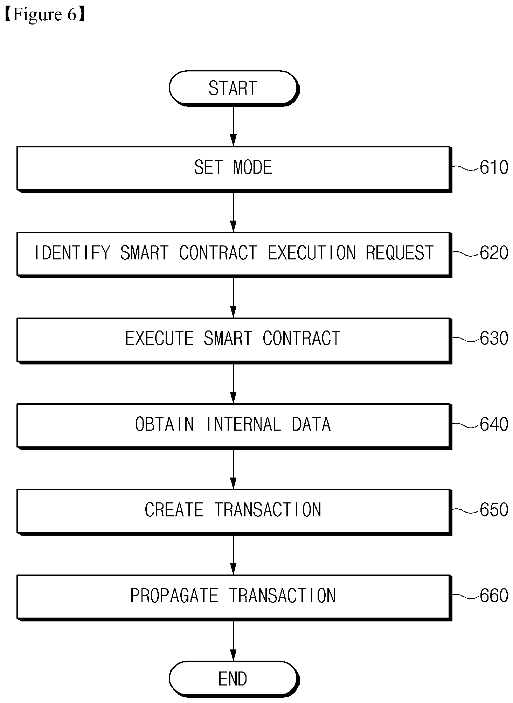

FIG. 6 is a flowchart illustrating an operation of the electronic device 201, according to an embodiment.

Referring to FIG. 6, in step 610, the electronic device 201 sets a mode. The electronic device 201 may set the mode based on a user input.

The mode may indicate an authority that allows the third program 230 to access data of the memory 130 and an authority that allows the third program 230 to access a memory region of the memory 130 that the OS 142 manages. The mode may be classified as a mode that permits access of the third program 230 to data or as a mode that does not permit access. The mode that permits access of the third program 230 to the data may include a plurality of modes in which whether to permit access is set differently depending on different types of data. A type of data may include an identifier of a terminal, information generated in the terminal, information about an authority to access (e.g., to read, write, revise, or erase) the information generated in the terminal, security information, private information, or a combination thereof.

The electronic device 201 may set the mode based on a user input obtained while a user interface 710 of the first program 210 is displayed.

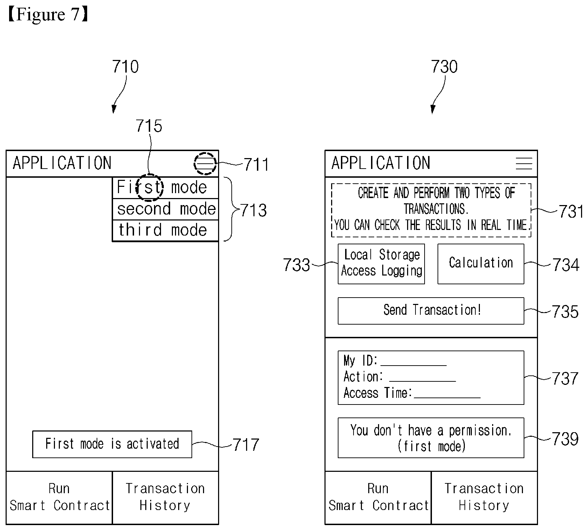

FIG. 7 illustrates user interfaces 710 and 730 of the electronic device 201, according to an embodiment.

Referring to FIG. 7, while the user interface 710 of the first program 210 is displayed, the electronic device 201 may display a window 713 capable of selecting at least one of the plurality of modes in response to an input 711 of selecting an object for setting a mode. A first mode may set an access authority of the third program 230 to be relatively high, a second mode may set the access authority of the third program 230 to be relatively low, and a third mode may not permit access of the third program 230 to a memory region of the memory 130 that the OS 142 manages. The first mode, the second mode, and/or the third mode may be displayed in the window 713.

In response to an input 715 of selecting one of the plurality of modes being displayed on the window 713, the electronic device 201 may set the authority of the third program 230 so as to access data of the memory 130.

After setting the authority of the third program 230 to access data of the memory 130, the electronic device 201 may display a message 717 indicating setting completion.

After setting the authority of the third program 230 to access data of the memory 130, the electronic device 201 may update the user interface 710 to a user interface 730. The user interface 730 may indicate a function of a smart contract executable through the third program 230. The user interface 730 may include a region 731 indicating descriptions about functions to be provided, objects 733 and 734 associated with functions, an object 735 for sending a transaction, or a combination thereof.

Referring again to FIG. 6, in step 620, the electronic device 201 identifies a smart contract execution request. The electronic device 201 may identify the smart contract execution request based on the user input obtained while the user interface 710 of the first program 210 is displayed.

The electronic device 201 may identify the selection of a function-related object based on the user input and may identify the selection of the object 735 for sending a transaction. The electronic device 201 may identify the smart contract execution request based on the user input of selecting the object 735 for sending a transaction.

The electronic device 201 may identify the smart contract execution request based on an input of selecting the object 733 associated with "Local Storage Access Logging" on the user interface 730 and an input of selecting the object 735 associated with "Send Transaction!" thereon.

In step 630, the electronic device 201 executes a smart contract.

The electronic device 201 may execute the smart contract through the third program 230 by calling a specified application programming interface (API) through the first program 210. The specified API may include identification information of a code of a smart contract, identification information about an execution function, a parameter associated with the execution function, or a combination thereof.

In step 640, the electronic device 201 obtains data. The electronic device 201 may obtain the data through the third program 230 and/or from a memory region of the memory 130, which the OS 142 manages, through the third program 230.

In the case where the third program 230 has authority to access data stored in the memory 130, the electronic device 201 may obtain the data stored in the memory 130 through the third program 230.

In the case where the third program 230 does not have authority to access data stored in the memory 130, the electronic device 201 may display, on the user interface 730, a notification 739 indicating that there is no access authority. The electronic device 201 may display, through the notification 739, information about a mode set to the third program 230 (e.g., a "first mode").

In step 650, the electronic device 201 creates a transaction. The electronic device 201 may create the transaction including the data obtained through the third program 230 as a payload. The transaction may include identification information of a user, a data access time, and information about an executed operation.

In step 660, the electronic device 201 propagates the transaction. The electronic device 201 may propagate the transaction to the decentralization network 250 through the third program 230.

In the case of propagating the transaction, the electronic device 201 may display an execution result of the smart contract on the user interface 730 and/or display contents 737 (e.g., identification information of a user, a data access time, and information about an executed operation) of the propagated smart contract on the user interface 730.

The transaction sent to the decentralization network 250 may be recorded on a block of the ledger 260 through the consensus mechanism of the nodes 251 and 253. After the transaction is recorded on the block of the ledger 260 and a specified block creation cycle passes, when the block on which the transaction is recorded secures finality, the transaction may be evaluated as successfully recorded on the ledger 260. In the case where the transaction is recorded on a block included in a main stream of a blockchain, the block on which the transaction is recorded may be evaluated as securing finality. As the number of blocks that are linked to the block on which the transaction is recorded increases, the finality of the block on which the transaction is recorded may be evaluated as high.

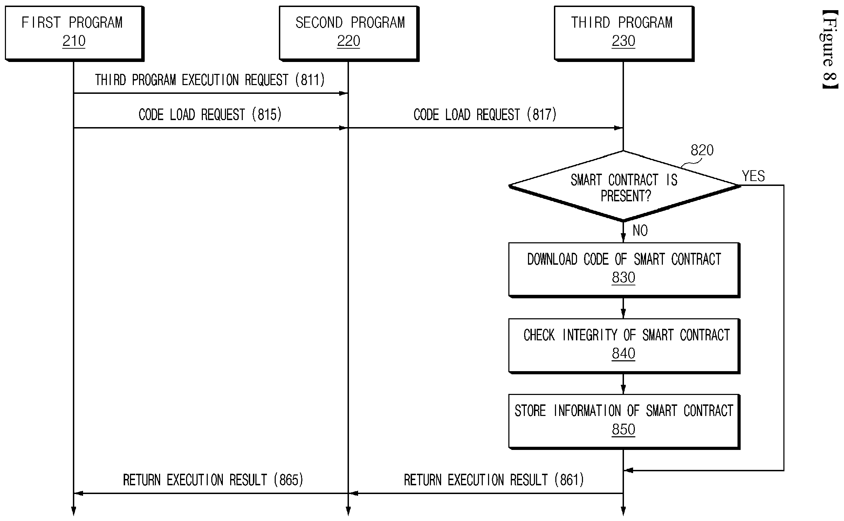

FIG. 8 is a flowchart illustrating an operation in which the electronic device 201 loads a code of a smart contract, according to an embodiment.

Referring to FIG. 8, in step 811, the first program 210 of the electronic device 201 sends a request for executing the third program 230 to the second program 220. The first program 210 may be a program for controlling an external device (e.g., a vehicle). The first program 210 may be a program for sharing private information (e.g., a health record) of a user with an external electronic device.

The second program 220 may create an instance of the third program 230 based on a request to generate the instance of the third program 230.

In step 815, the first program 210 requests a code load from the second program 220. The code load request may include identification information and/or version information of a transaction code.

In step 817, the second program 220 requests a code load from the third program 230. The second program 220 may request the code load from the third program 230 in response to the code load request of the first program 210. The second program 220 may process the code load request of the first program 210 to a format capable of being processed by the third program 230 and may provide the processed code load request to the third program 230.

In step 820, the third program 230 determines whether a code of a smart contract exists. The third program 230 may determine whether the code of the smart contract is present in the memory 130, in response to the code load request.

When code of the smart contract does not exist, the third program 230 performs step 830. When the code of the smart contract exists, the third program 230 performs step 861.

In step 830, the third program 230 downloads the code of the smart contract. The third program 230 may download the code of the smart contract over a network (e.g., the nodes 251 and 253 or an external server).

In step 840, the third program 230 checks the integrity of the downloaded smart contract. The third program 230 may check the integrity of the downloaded smart contract by using an external server. The external server may be a server that stores information of the smart contract (e.g., a code, a version, and an identifier).

In step 850, the third program 230 stores the information of the smart contract. The third program 230 may store information in which the identification information of the smart contract and any other information (e.g., a store path or version information) are mapped.

In step 861, the third program 230 returns an execution result to the second program 220. A returned value may include map data.

In step 865, the second program 220 returns the execution result to the first program 210. The second program 220 may process the return value of the third program 230 to a format capable of being processed by the first program 210 and may provide the processed return value to the first program 210.

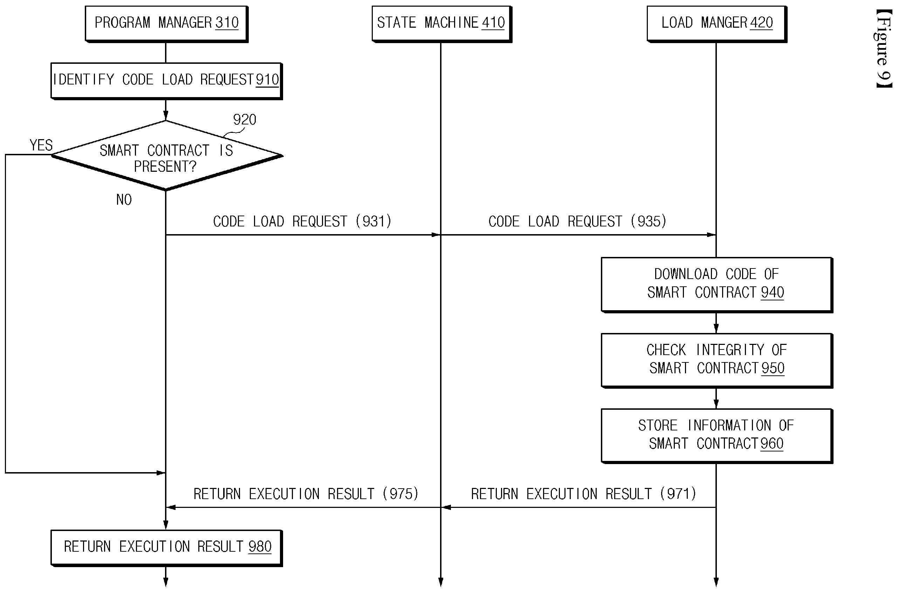

FIG. 9 is a flowchart illustrating a detailed operation in which the electronic device 201 loads a code of a smart contract, according to an embodiment. The steps of FIG. 9 may correspond to step 817, step 820, step 830, step 840, step 850, and step 861 of FIG. 8.

Referring to FIG. 9, in step 910, the program manager 310 of the third program 230 identifies a code load request. The program manager 310 may identify the code load request from the second program 220.

In step 920, the program manager 310 determines whether a code of a smart contract exists. The program manager 310 may determine whether the code of the smart contract exists, based on identification information of the smart contract. The program manager 310 may determine whether the code of the smart contract exists, by searching the map data for the identification information of the smart contract.

When the code of the smart contract does not exist, the program manager 310 may perform step 931. When the code of the smart contract exists, the program manager 310 performs step 980.

In step 931, the program manager 310 requests a code load from the state machine 410 of the program service module 330.

In step 935, the state machine 410 requests the load manager 420 for the code load.

In step 940, the load manager 420 downloads the code of the smart contract. The load manager 420 may download the code of the smart contract over a network (e.g., the nodes 251 and 253 or an external server).

In step 950, the load manager 420 checks the downloaded smart contract. The third program 230 may check the integrity of the downloaded smart contract by using an external server. The external server may be a server that stores information of the smart contract (e.g., a code, a version, and an identifier).

In step 960, the load manager 420 stores the information of the smart contract. The load manager 420 may store information in which the identification information of the smart contract and any other information (e.g., a store path or a version) are mapped.

In step 971, the load manager 420 returns an execution result to the state machine 410.

In step 975, the state machine 410 returns the execution result to the program manager 310. The state machine 410 may return the execution result to the program manager 310 through the event manager 480.

In step 980, the program manager 310 returns the execution result. The program manager 310 may return the execution result to the second program 220.

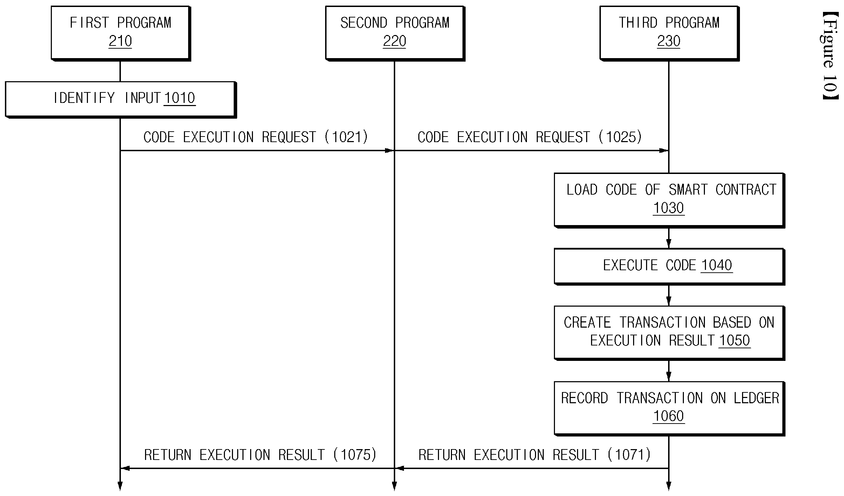

FIG. 10 is a flowchart illustrating an operation in which the electronic device 201 executes a smart contract, according to an embodiment.

Referring to FIG. 10, in step 1010, the first program 210 identifies an input. The first program 210 may identify an input of requesting the execution of a code of a smart contract through the user interface 710.

In step 1021, the first program 210 requests code execution from the second program 220. The request for code execution may include identification information of a smart contract, version information, information about an execution function, a parameter associated with the execution function, or a combination thereof.

In step 1025, the second program 220 requests code execution from the third program 230. The second program 220 may process the code execution request of the first program 210 to a format capable of being processed by the third program 230 and may provide the processed code execution request to the third program 230.

In step 1030, the third program 230 loads (or fetches) the code of the smart contract. The third program 230 may load the code of the smart contract based on a path that is found from the map data based on the identification information.

In step 1040, the third program 230 executes the code of the smart contract. The third program 230 may access data of the memory 130 by executing the code of the smart contract. As the code of the smart contract is executed, the third program 230 may access data targeted for access (or access-requested data).

When the third program 230 has the authority to access the data targeted for access, the third program 230 may obtain the data targeted for access.

When the third program 230 does not have the authority to access the data targeted for access, the third program 230 may provide a notification, which indicates that the third program 230 does not have data access authority, to the first program 210 through the second program 220. The first program 210 may provide the notification, which indicates that there is no data access authority, to the user through a user interface.

In step 1050, the third program 230 creates a transaction based on an execution result. The third program 230 may create the transaction in which the execution result is included in a payload. The third program 230 may create a signed transaction by allowing the user to sign the transaction through the authentication manager 460.

In step 1060, the third program 230 records the transaction on the ledger 260. The third program 230 may record the transaction on the ledger 260 by sending the transaction to at least one node (e.g., the node 251 or 253) of the decentralization network 250.

In step 1071, the third program 230 returns the execution result to the second program 220. When the transaction is created, the execution result may include an identifier of the transaction, an executed operation, a user identifier, an execution time, or a combination thereof.

In step 1075, the second program 220 returns the execution result to the first program 210.

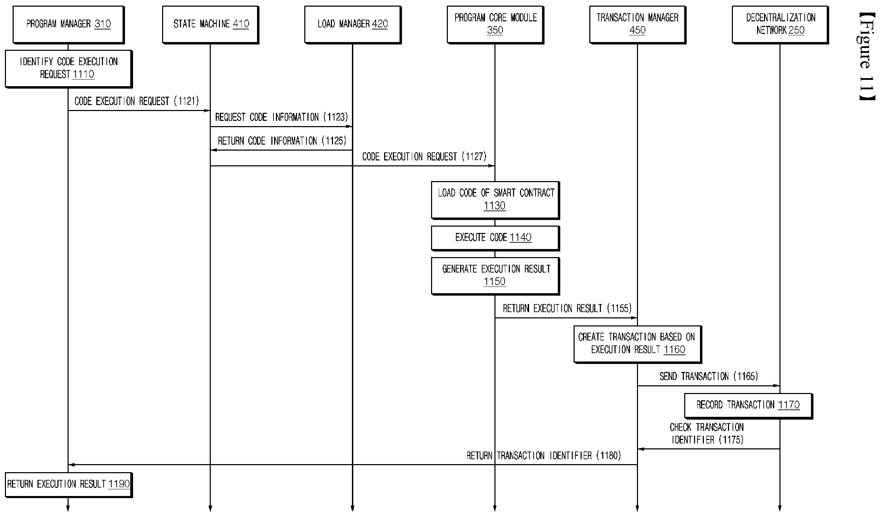

FIG. 11 is a flowchart illustrating a detailed operation in which the electronic device 201 executes a smart contract, according to an embodiment. The steps of FIG. 11 may correspond to step 1025, step 1030, step 1040, step 1050, step 1060, and step 1071 of FIG. 10.

Referring to FIG. 11, in step 1110, the program manager 310 identifies a code execution request. The program manager 310 may identify the code execution request received from the second program 220. The code execution request may include identification information of a smart contract.

In step 1121, the program manager 310 sends the code execution request to the state machine 410 of the program service module 330.

In step 1123, the state machine 410 requests code information from the load manager 420.

In step 1125, the load manager 420 returns the code information to the state machine 410. The load manager 420 may return the code information, which is found from map data based on the identification information, to the state machine 410. The code information may include a path of the smart contract.

In step 1127, the state machine 410 requests code execution from the program core module 350.

In step 1130, the program core module 350 loads a code of the smart contract. The program core module 350 may load (or fetch) the code of the smart contract based on the path of the smart contract.

In step 1140, the program core module 350 executes the code.

The program core module 350 may access data of the memory 130 by executing the code of the smart contract. As the code of the smart contract is executed, the program core module 350 may access data targeted for access.

When the authority to access the data targeted for access exists, the program core module 350 may obtain the data targeted for access. When the authority to access the data targeted for access does not exist, the program core module 350 may fail to access the data targeted for access.

In step 1150, the program core module 350 generates an execution result. The execution result may indicate data that the program core module 350 accesses and/or data that is obtained by encrypting the data accessed by the program core module 350. The execution result may be a notification indicating that the third program 230 does not have a data access authority.

In step 1155, the program core module 350 may return the execution result to the transaction manager 450 of the program service module 330. The program core module 350 may return the execution result, which indicates data that the program core module 350 accesses, to the transaction manager 450.

When the transaction manager 450 receives the execution result, which indicates that the third program 230 does not have data access authority, from the program core module 350, the transaction manager 450 may send a notification, which indicates that the third program 230 does not have data access authority, to the first program 210 through the second program 220. The first program 210 may provide the notification, which indicates that there is no data access authority, to the user through a user interface.

In step 1160, the transaction manager 450 creates a transaction based on the execution result. The transaction manager 450 may create the transaction in which the execution result is included in a payload. The transaction manager 450 may create a signed transaction by allowing the user to sign the transaction through the authentication manager 460.

In step 1165, the transaction manager 450 sends the transaction to the decentralization network 250.

In step 1170, the decentralization network 250 records the transaction on the ledger 260. The nodes 251 and 253 of the decentralization network 250 may verify the transaction from the electronic device 201 and may record the verified transaction on a new block of the ledger 260 in the decentralization network 250. In the case where the block on which the transaction from the electronic device 201 is recorded secures finality, the transaction may be determined as being finally recorded on the ledger 260 of the decentralization network 250. In the case where the block on which the transaction from the electronic device 201 is recorded is not invalidated even after a specified block creation cycle (e.g., 40 times), the transaction may be determined as being finally recorded on the ledger 260 of the decentralization network 250.

In step 1175, the transaction manager 450 may check a transaction identifier (e.g., a hash value of the transaction).

In step 1180, the transaction manager 450 may return a transaction identifier (e.g., a hash value of the transaction) to the program manager 310.

The transaction manager 450 may send, to the program manager 310, the identifier of the transaction that is obtained by hashing the transaction before the transaction is recorded on the ledger 260 of the decentralization network 250. After the transaction is recorded on the ledger 260 of the decentralization network 250, the transaction manager 450 may send the identifier of the transaction to the program manager 310.

In step 1190, the program manager 310 may return the execution result. The program manager 310 may return the execution result to the second program 220. When the transaction is created, the execution result may include an identifier of the transaction, an executed operation, a user identifier, an execution time, or a combination thereof.

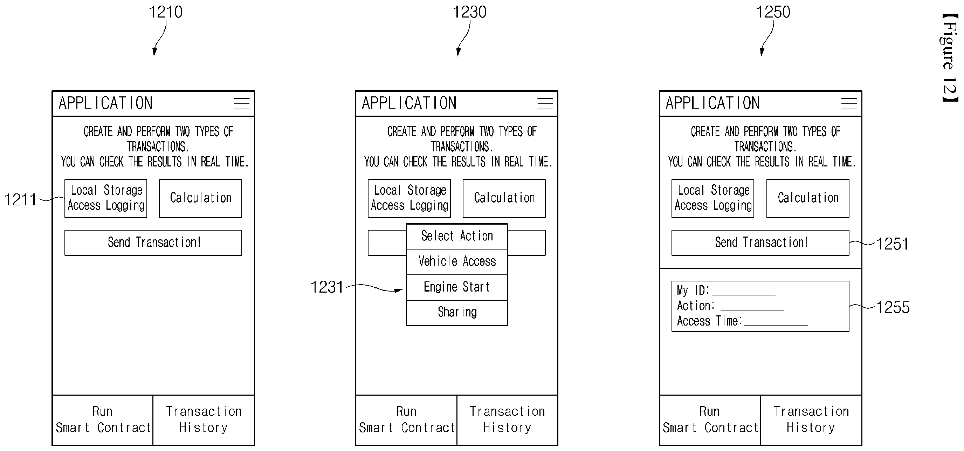

FIG. 12 illustrates user interfaces 1210, 1230, and 1250 of the electronic device 201, according to an embodiment.

The electronic device 201 may execute the first program 210 for controlling an external device (e.g., a vehicle). The electronic device 201 may display the user interface 1210 based on an execution result of the first program 210.

When the first program 210 is executed, the electronic device 201 may execute an instance of the third program 230 for controlling the external device. The third program 230 may load a code of a smart contract for controlling the external device.

Referring to FIG. 12, the electronic device 201 may identify an input 1211 on the user interface 1210. The input 1211 may be an input for checking a controllable function(s) associated with the external device.

The electronic device 201 may display the user interface 1230 including an object 1231 indicting a controllable function(s) associated with the external device. The object 1231 indicting the controllable function(s) associated with the external device may be a pop-up window. The controllable function(s) associated with the external device may include a vehicle access function (e.g., a car door opening function), an engine start function, a sharing function (e.g., key sharing function), or a combination thereof.

The electronic device 201 may identify an input of selecting one of controllable functions associated with the external device.

The electronic device 201 may display the user interface 1250 capable of executing the selected function, in response to the input of selecting the function.

When the electronic device 201 identifies an input 1251 on the user interface 1250, which requests the execution of the function, the electronic device 201 may execute a code of a smart contract corresponding to the function.

In response to the input 1251, the electronic device 201 may obtain data (e.g., an electronic key) associated with a function of an external device (e.g., a vehicle) from the memory 130 through the third program 230. In response to the input 1251, the electronic device 201 may obtain information of an application, which requests access to the data (e.g., an electronic key) associated with the function of the external device (e.g., a vehicle), from the memory 130 through the third program 230. In response to the input 1251, the electronic device 201 may obtain information of a user, which requests access to the data (e.g., an electronic key) associated with the function of the external device (e.g., a vehicle), from the memory 130 through the third program 230.

The electronic device 201 may create a transaction including the obtained data as a payload. The electronic device 201 may perform the user's signature on the created transaction. The electronic device 201 may send the signed transaction to the decentralization network 250. Information included in the transaction may include data associated with a function of an external device (e.g., a vehicle), information of an application requesting access, user information, function information, or a combination thereof.

The electronic device 201 may display a result 1255 of executing the code of the smart contract on the user interface 1250.

The electronic device 201 may execute the first program 210 for sharing private information (e.g., a PHR) of the user with an external electronic device.

The electronic device 201 may identify a sharing input of the user. The electronic device 201 may execute a code of a smart contract corresponding to the sharing input.

The electronic device 201 may obtain private information of the user from the memory 130 through the third program 230 in response to the sharing input. The electronic device 201 may obtain, from the memory 130, private information selected based on the sharing input from among the private information of the user.

The electronic device 201 may encrypt the obtained data. The electronic device 201 may create a transaction including the encrypted data as a payload. The electronic device 201 may perform the user's signature on the created transaction. The electronic device 201 may send the signed transaction to the decentralization network 250.

When the signed transaction is recorded on the decentralization network 250, the electronic device 201 may issue an authentication means that allows an external electronic device, which requests to read private information, to read the encrypted private information included in the transaction.

The external electronic device may read the encrypted private information included in the transaction by using the authentication means through the first program 210 of the external electronic device. The number of times that the external electronic device reads private information may be recorded on a block of the decentralization network 250.

The electronic device 201 may identify the number of times private information is read by the external electronic device through the decentralization network 250. The electronic device 201 may prohibit the external electronic device from reading private information by invalidating the authentication means issued to the external electronic device.

According to an embodiment of the disclosure, a portable electronic device may include a communication circuit, a processor that is electrically connected with the communication circuit, and a memory that is electrically connected with the processor and stores instructions. The instructions, when executed by the processor, may cause the portable electronic device to execute a first smart contract, to obtain at least a portion of data stored in the memory, by executing the first smart contract, to create a transaction including the at least portion of data, to sign the created transaction based on a private key of a user of the portable electronic device, and to send the signed transaction to at least one node of a decentralization network through the communication circuit.

The instructions, when executed by the processor, may cause the portable electronic device to obtain an input through an application executed in a first execution environment, to identify the first smart contract of at least one executable smart contract, based on the input, in a second execution environment distinguished from the first execution environment, and to execute the first smart contract thus identified.

The at least portion of data may be stored in a region of the memory, which is managed in the first execution environment.

The application may set an authority to access the data stored in the memory to the second execution environment.

The instructions, when executed by the processor, may cause the portable electronic device to provide the application with identification information about the created transaction in the second execution environment and to allow the application to provide a user with the identification information about the created transaction through a user interface.

The instructions, when executed by the processor, may cause the portable electronic device to provide the user with an executed operation or an execution time of the first smart contract or a combination thereof through the user interface.

The first smart contract may be obtained from the at least one node.

The first smart contract may be recorded on a ledger of the decentralization network.

The at least portion of data may be encrypted and may then be included in the transaction.

The portable electronic device may operate as a node of the decentralization network, and the at least one node may be capable of being carried by a user.

The signed transaction may be sent to the at least one node capable of being carried by a user.

The at least one node may be a smartphone.

The instructions, when executed by the processor, may cause the portable electronic device to send the signed transaction to the at least one node over a cellular network, by using the communication circuit.

The transaction may be verified by the portable electronic device and may then be sent to the at least one node.

According to an embodiment of the disclosure, an operating method of a portable electronic device may include executing a first smart contract, obtaining at least a portion of data stored in the memory, by executing the first smart contract, creating a transaction including the at least portion of data, signing the created transaction based on a private key of a user of the portable electronic device, and sending the signed transaction to at least one node of a decentralization network through a communication circuit of the portable electronic device.

The method may further include obtaining an input through an application executed in a first execution environment, identifying the first smart contract of at least one executable smart contract, based on the input, in a second execution environment distinguished from the first execution environment, and executing the first smart contract thus identified.

The at least portion of data may be stored in a region of the memory, which is managed in the first execution environment.

The application may set an authority to access the data stored in the memory to the second execution environment.

The method may further include providing the application with identification information about the created transaction in the second execution environment, and allowing the application to provide a user with the identification information about the created transaction through a user interface.

In addition, an executed operation or an execution time of the first smart contract or a combination thereof may be provided to the user through the user interface.

The first smart contract may be obtained from the at least one node.

The first smart contract may be recorded on a ledger of the decentralization network.

The at least portion of data may be encrypted and may then be included in the transaction.

The portable electronic device may operate as a node of the decentralization network, and the at least one node may be capable of being carried by a user.

The signed transaction may be sent to the at least one node capable of being carried by a user.

The at least one node may be a smartphone.

The sending of the signed transaction to the at least one node may include sending the signed transaction to the at least one node over a cellular network, by using the communication circuit.

The transaction may be verified by the portable electronic device and may then be sent to the at least one node.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A portable electronic device, comprising:
a communication circuit;
a processor; and
a memory configured to store instructions,
wherein the instructions, when executed by the processor, cause the portable electronic device to:
execute a first smart contract;
obtain at least a portion of data stored in the memory, by executing the first smart contract;
create a transaction including the at least portion of data;
sign the created transaction based on a private key of a user of the portable electronic device; and
send the signed transaction to at least one node of a decentralization network through the communication circuit.

2. The portable electronic device of claim 1, wherein the instructions, when executed by the processor, cause the portable electronic device to:
obtain an input through an application executed in a first execution environment;
identify the first smart contract of at least one executable smart contract, based on the input, in a second execution environment distinguished from the first execution environment; and
execute the identified first smart contract.

3. The portable electronic device of claim 2, wherein the at least portion of data is stored in a region of the memory, which is managed in the first execution environment.

4. The portable electronic device of claim 2, wherein the application is configured to set an authority to access the at least portion of data stored in the memory to the second execution environment.

5. The portable electronic device of claim 2, wherein the instructions, when executed by the processor, cause the portable electronic device to:
provide the application with identification information about the created transaction in the second execution environment, and
allow the application to provide a user with the identification information about the created transaction through a user interface.

6. The portable electronic device of claim 5, wherein the instructions, when executed by the processor, cause the portable electronic device to:
provide the user with an executed operation or an execution time of the first smart contract or a combination thereof through the user interface.

7. The portable electronic device of claim 1, wherein the first smart contract is obtained from the at least one node.

8. The portable electronic device of claim 1, wherein the first smart contract is recorded on a ledger of the decentralization network.

9. The portable electronic device of claim 1, wherein the at least portion of data is encrypted and is then included in the transaction.

10. The portable electronic device of claim 1, wherein the portable electronic device is configured to operate as a node of the decentralization network,
wherein the at least one node is capable of being carried by a user; and
wherein the instructions, when executed by the processor, cause the portable electronic device to:
send the signed transaction to the at least one node over a cellular network, by using the communication circuit.

11. A method performed by a portable electronic device, the method comprising:
executing a first smart contract;
obtaining at least a portion of data stored in a memory of the portable electronic device, by executing the first smart contract;
creating a transaction including the at least portion of data;
signing the created transaction based on a private key of a user of the portable electronic device; and
sending the signed transaction to at least one node of a decentralization network through a communication circuit of the portable electronic device.

12. The method of claim 11, further comprising:
obtaining an input through an application executed in a first execution environment;
identifying the first smart contract of at least one executable smart contract, based on the input, in a second execution environment distinguished from the first execution environment; and
executing the identified first smart contract.

13. The method of claim 12, wherein the at least portion of data is stored in a region of the memory, which is managed in the first execution environment.

14. The method of claim 12, wherein the application is configured to set an authority to access the at least portion of data stored in the memory to the second execution environment.

15. The method of claim 12, further comprising:
providing the application with identification information about the created transaction in the second execution environment; and
allowing the application to provide a user with the identification information about the created transaction through a user interface.
